(19) Europäisches Patentamt
European Patent Office
Office européen des brevets

(11) **EP 3 538 627 B1**

(12) **FASCICULE DE BREVET EUROPEEN**

(45) Date de publication et mention de la délivrance du brevet:
**12.08.2020 Bulletin 2020/33**

(21) Numéro de dépôt: **17800419.8**

(22) Date de dépôt: **31.10.2017**

(51) Int Cl.:
*C10G 49/22* *(2006.01)*    *B01D 17/00* *(2006.01)*
*B01D 19/00* *(2006.01)*    *B01J 8/22* *(2006.01)*

(86) Numéro de dépôt international:
**PCT/EP2017/077847**

(87) Numéro de publication internationale:
**WO 2018/086957 (17.05.2018 Gazette 2018/20)**

(54) **NOUVEAU DISPOSITIF DE SEPARATION GAZ LIQUIDE POUR EQUIPER LES REACTEURS EN LIT FLUIDISE TRIPHASIQUE TELS QUE CEUX UTILISES DANS LE PROCEDE H-OIL**

NEUE VORRICHTUNG ZUR GAS-FLÜSSIG-TRENNUNG FÜR DREIPHASIGE WIRBELSCHICHTREAKTOREN WIE SOLCHE ZUR VERWENDUNG IM H-ÖL-PROZESS

NEW DEVICE FOR GAS-LIQUID SEPARATION, INTENDED FOR THREE-PHASE FLUIDISED BED REACTORS SUCH AS THOSE USED IN THE H-OIL PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2016 FR 1660834**

(43) Date de publication de la demande:
**18.09.2019 Bulletin 2019/38**

(73) Titulaire: **IFP Energies nouvelles**
**92852 Rueil-Malmaison (FR)**

(72) Inventeurs:
- **AMBLARD, Benjamin**
  **69007 Lyon (FR)**
- **FERRE, Daniel**
  **69560 Saint Cyr sur Rhone (FR)**
- **LE COZ, Jean-François**
  **78100 Saint Germain en Laye (FR)**

(56) Documents cités:
**EP-A1- 0 428 796    US-A- 5 624 642**

**Description**

## CONTEXTE DE L'INVENTION

L'invention consiste en l'amélioration du dimensionnement de la partie supérieure des réacteurs gaz liquide solide utilisés dans le procédé H-Oil en vue d'obtenir une meilleure séparation gaz/liquide dans ladite zone supérieure souvent appelée « recycle cup ». La terminologie anglo saxonne de « recycle cup » sera traduite dans le présent texte par la locution zone de recyclage liquide, ou plus simplement zone de recyclage. La terminologie anglo saxonne de« spirale riser » sera traduite dans le présent texte par la locution dispositif de séparation gaz/liquide.

Le procédé H-Oil est un procédé d'hydroconversion de coupes hydrocarbonées lourdes, de type gas oil sous vide ou résidus, qui met donc en présence la phase hydrocarbure liquide, la phase gaz hydrogène dispersée sous forme de bulles, et le catalyseur lui-même dispersé sous forme de particules d'une taille typiquement comprise entre 0,2 et 2 millimètres.

Le procédé H-Oil est donc un procédé fluidisé triphasique qui utilise un réacteur spécifique, ledit réacteur étant équipé d'un dispositif de séparation gaz liquide situé dans la partie supérieure du réacteur de manière à permettre le recyclage du liquide qui est renvoyé après séparation dans la zone réactionnelle du réacteur. Une des caractéristiques importantes des réacteurs de type H-Oil est leur taux de recyclage liquide défini comme le rapport du débit liquide recyclé sur le débit de charge liquide entrant et qui est généralement situé dans la gamme de 1 à 10.

La présente invention peut se définir comme un dispositif amélioré de séparation gaz liquide des réacteurs de type H-Oil qui permet la réintroduction de la majorité du liquide sans gaz vers la zone réactionnelle, et l'évacuation du gaz (pouvant encore contenir une minorité de liquide) hors du réacteur.

Le présent dispositif permet d'atteindre des efficacités de séparation gaz/liquide supérieures à celle des « spirale riser » de l'art antérieur.

## DESCRIPTION SOMMAIRE DES FIGURES

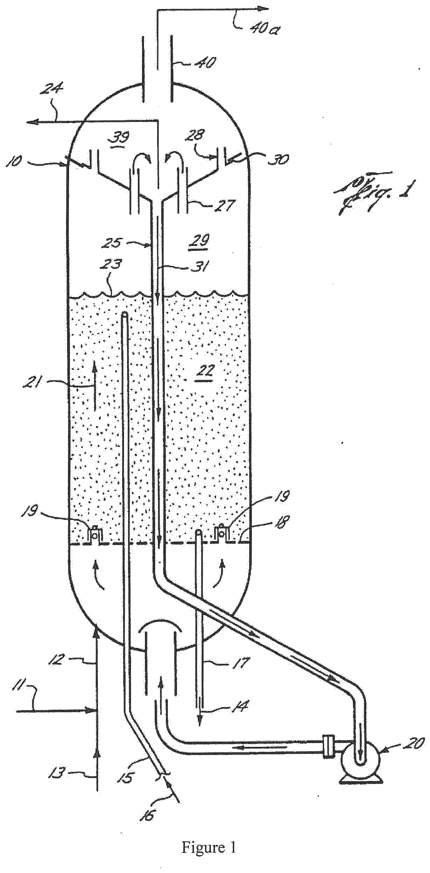

La figure 1 selon l'art antérieur représente un schéma d'un réacteur en lit fluidisé triphasique utilisé dans le procédé H-Oil. Cette figure permet de visualiser la zone réactionnelle (22) correspondant au lit fluidisé triphasique contenant le catalyseur, la zone située au-dessus de la zone catalytique appelée zone de séparation gaz liquide (29) qui permet le recyclage du liquide vers la partie inférieure du réacteur au moyen de la pompe de recyclage (20).
Les dispositifs de séparation gaz solide sont représentés par les éléments (27) et (28), certains éléments ayant leur extrémité inférieure située dans la zone (29), et d'autres éléments ayant leur extrémité inférieure située sur la surface conique de la « recycle cup » (39). Ce sont ces éléments de séparation qui font l'objet de la présente invention, le reste du réacteur n'étant pas modifié par rapport à l'art antérieur.

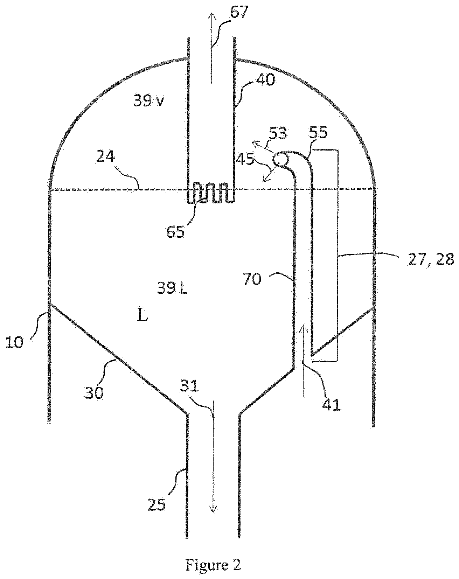

La figure 2 représente une vue schématique plus détaillée de la partie supérieure du réacteur appelée zone de recyclage de liquide puisqu'elle se termine par un conduit interne (25) qui, après séparation gaz/liquide, ramène le liquide vers la partie inférieure du réacteur via la pompe de recyclage (20). Les dispositifs de séparation gaz liquide (27) et (28) sont implantés le long de la surface conique (30) de la zone de recyclage. L'entrée du mélange gaz/liquide se fait par les conduits (70). La séparation gaz/liquide a lieu dans les dispositifs (55). Chaque dispositif de séparation (55) consiste donc en l'élément tubulaire d'admission du mélange gaz liquide (70) se terminant par la succession de deux coudes situés dans deux plans distincts :

- le premier plan noté (yz) est perpendiculaire à l'axe x,
- le second plan noté (xy) est perpendiculaire à l'axe z.

Il n'y a pas d'élévation selon la verticale au passage des deux coudes successifs. La côte verticale (selon l'axe z) du premier coude, et la côte verticale (selon l'axe z) du second coude sont sensiblement les mêmes. On entend par sensiblement un écart vertical qui ne dépasse pas le valeur D du diamètre de la conduite d'admission du mélange gaz liquide (70).
Le liquide s'écoulant après sa sortie des éléments de séparation le long de la paroi conique (30) est récupéré par la conduite de sortie descendante (25), et le gaz est évacué par la sortie du second coude de chaque élément de séparation (27) et (28). Le gaz occupe donc l'extrémité supérieure (39v) de la zone de séparation (39) située au-dessus de l'interface gaz liquide (24) et quitte le réacteur par le conduit de sortie (67).

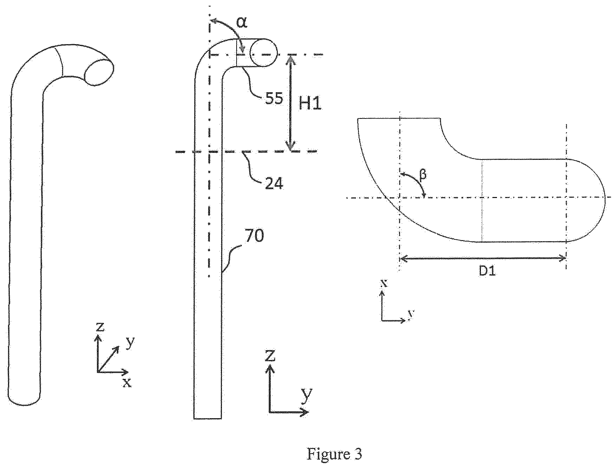

La figure 3 supporte les informations permettant le dimensionnement des dispositifs de séparation selon l'invention (27) et (28). On notera en particulier l'angle alpha du premier coude et l'angle beta du second coude, ainsi que la distance D1 séparant les deux coudes successifs.

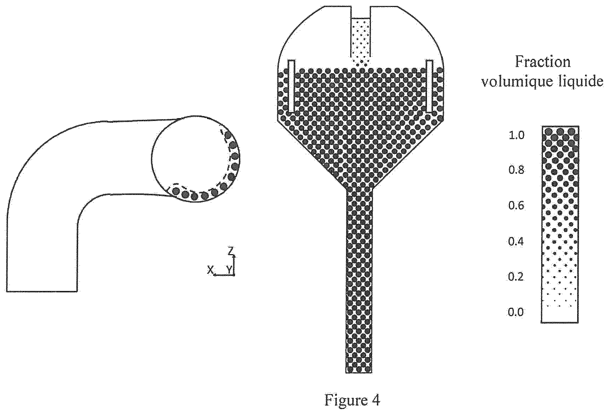

La figure 4 est une visualisation de l'efficacité de la séparation gaz liquide résultant d'une simulation 3D effectuée au moyen du logiciel Fluent™. Cette simulation porte sur la sortie du dispositif de séparation et sur l'ensemble de la zone de recyclage. Elle permet de constater au moyen des nuances de gris la présence du gaz en gris clair, et la localisation du liquide en gris foncé. Plus la nuance de gris est foncée, plus la présence de liquide est importante.

## EXAMEN DE L'ART ANTERIEUR

L'examen de l'art antérieur dans le domaine de la séparation gaz liquide des réacteurs triphasiques de type H-oil fait apparaitre le document US,4,886,644 qui est rapidement analysé ci-dessous :
Le brevet US 4,886,644 qu'on peut considérer comme l'art antérieur le plus proche, décrit le concept des spirales risers dans le procédé H-Oil.
Les principales revendications concernent le design des spirales risers (nombre de tours de la spirale et angle par rapport à l'horizontale).
La « recycle cup » décrite dans le texte cité correspond à la partie supérieure du réacteur qui permet après séparation du gaz et du liquide, le retour du liquide dans la zone réactionnelle du réacteur, et l'évacuation du gaz par une conduite dédiée.
Nous utiliserons dans la suite du texte la terminologie zone supérieure de recyclage du liquide ou plus simplement, zone de recyclage, pour « recycle cup ».
Le document US 4, 886,644, montre par ailleurs un arrangement de la zone supérieure de recyclage qui combine la conduite d'évacuation gaz/liquide en haut du réacteur avec un hydrocyclone. US 5 624 642 divulgue un dispositif de séparation gaz liquide.

## DESCRIPTION SOMMAIRE DE L'INVENTION

La présente invention peut se définir comme un dispositif de séparation gaz liquide implanté dans la zone de recycle des réacteurs fluidisés triphasiques utilisés dans les procédés d'hydroconversion de coupes hydrocarbonées lourdes en présence d'hydrogène sous forte pression, procédé que nous appellerons procédé de type H-Oil. En fait le présent dispositif peut être utilisé dans tout type de réacteur en lit fluidisé triphasique ayant besoin d'une séparation gaz liquide.
On entend par procédé en lit fluidisé triphasique un procédé dans lequel trois phases se trouvent en présence dans la zone réactionnelle ; une phase liquide, constituant généralement la charge à traiter, une phase gaz sous forte pression généralement de l'hydrogène, et une phase solide correspondant au catalyseur divisé en particules solide, le plus souvent d'un diamètre compris entre 0,2 et 2 mm, et préférentiellement compris entre 0,7 et 1,5 mm.
Le dispositif de séparation selon la présente invention consiste en une pluralité d'éléments de séparation (27) et (28) fonctionnant en parallèle et implantés verticalement à partir de la surface conique (30) de la zone de recycle (39).
La zone de recycle (39) se décompose en une partie supérieure (39 v) correspondant au gaz, et en une partie inférieure (39 L) correspondant au liquide. Ces deux zones sont en cours de fonctionnement séparées par un interface gaz liquide (24).
Chaque élément de séparation (27) et (28) se termine par une succession de deux coudes;
un premier coude situé dans le plan (z,y), puis un second coude situé dans le plan (x,y).
Le premier coude dans le plan (yz) a son orientation défini par son angle $\alpha$ compris entre 45 et 315° de préférence entre 60°et 300° et de manière préférée entre 80°et 200°.
Le deuxième coude dans le plan (xy) a son orientation défini par son angle $\beta$ compris entre 0°et 135° de préférence entre 10° et 110°, et de manière préférée entre 30°et 100°.
L'axe z correspond à l'axe vertical et le plan (xy)est le plan perpendiculaire à l'axe z, soit un plan sensiblement horizontal.
Ces deux coudes successifs sont séparés d'une distance D1 comprise entre D/2 et 4D et préférentiellement comprise entre D/2 et 2D, D étant le diamètre de la conduite (70).
Dans le dispositif de séparation gaz liquide selon la présente invention, la densité des éléments de séparation (27) et (28) est généralement comprise entre 5 et 70 unités par m2 de surface de réacteur en fût vide.
La présente invention peut également se définir comme un procédé d'hydroconversion de coupes hydrocarbonées lourdes en lit fluidisé triphasique utilisant le dispositif de séparation gaz liquide selon les caractéristiques données plus haut, procédé fonctionnant aux conditions opératoires suivantes :

- une pression absolue comprise entre 2 et 35 MPa, de préférence entre 5 et 25 MPa, et de manière encore préférée, entre 6 et 20 MPa,

- une température comprise entre 300°C et 550°C, de préférence comprise entre 350 et 500°C, et d'une manière encore préférée comprise entre 370 et 430°C, la plage de température privilégiée se situant entre 380°C et 4 30°C,

- la vitesse superficielle de l'écoulement ascendant prise à l'intérieur de chaque conduit d'admission (70) est généralement comprise entre à 0,1 et 20 m/s, préférentiellement entre 0,2 et 15 m/s, et de manière encore préférée comprise entre 0,3 et 10 m/s.

## DESCRIPTION DETAILLEE DE L'INVENTION

Pour bien comprendre l'invention il est nécessaire de décrire sommairement le fonctionnement d'un réacteur de type H-Oil, tel que représenté sur la figure 1 selon l'art antérieur.

La figure 1 est un schéma représentatif montrant les principaux éléments d'un réacteur H-Oil selon l'art antérieur. Ce réacteur est conçu d'une manière spécifique avec des matériaux appropriés lui permettant de traiter des liquides réactifs, des « slurry » liquide-solide, (c'est-à-dire des liquides contenant de fines particules solides dispersées en son sein), des solides et des gaz à température et pression élevées avec une application préférée pour le traitement de coupes hydrocarbures liquides avec de l'hydrogène à haute température et haute pression, c'est-à-dire à une pression absolue comprise entre 2 et 35 MPa, de préférence entre 5 et 25 MPa, et de manière encore préférée, entre 6 et 20 MPa, et à une température comprise entre 300°C et 550°C, de préférence compri se entre 350°C et 500°C, et d'une manière encore préférée comprise entre 370°C et 460 °C, la plage de température privilégiée se situant entre 380°C et 440°C.

Le réacteur type H-Oil (10) est conçu avec un conduit d'entrée approprié (12) pour l'injection d'une charge hydrocarbonée lourde (11) et d'un gaz (13) contenant de l'hydrogène. Les conduits de sortie sont positionnés dans la partie supérieure du réacteur (10). Le conduit de sortie (40) est conçu pour soutirer des vapeurs pouvant contenir une certaine quantité de liquide, et en option le conduit (24) permet de soutirer principalement du liquide. Le réacteur contient aussi un système permettant l'introduction et le soutirage de particules de catalyseur montré schématiquement par le conduit (15) pour l'introduction du catalyseur frais (16), et le conduit (17) pour le soutirage du catalyseur usé (14).

La charge d'hydrocarbures lourds est introduite à travers le conduit (11), pendant que le gaz contenant l'hydrogène est introduit à travers le conduit (13). Le mélange charge et hydrogène gazeux est ensuite introduit dans le réacteur (10) à travers le conduit (12) dans la partie inférieure du réacteur.

Les fluides entrant passent à travers un plateau (18) contenant des distributeurs appropriés.

Dans ce schéma, des distributeurs de type « bubble cap » (19) sont montrés, mais il est entendu que tout distributeur connu de l'homme du métier permettant de distribuer les fluides provenant du conduit (12) sur toute la surface du réacteur 10, et ceci de la manière la plus homogène possible, peut être utilisé.

Le mélange liquide/gaz s'écoule vers le haut et les particules de catalyseur sont entraînées dans un mouvement de lit bouillonnant par l'écoulement gaz et l'écoulement liquide induit par la pompe de recirculation (20) qui peut être interne ou externe au réacteur (10).

L'écoulement ascendant de liquide délivré par la pompe (20) est suffisant pour que la masse de catalyseur dans la zone de réaction ou lit catalytique (22) s'expanse d'au moins 10%, de préférence de 20 à 100 % par rapport au volume statique (c'est-à-dire au repos) du lit de catalyseur, permettant ainsi l'écoulement de gaz et liquide à travers le réacteur (10), comme montré par les flèches de direction (21).

A cause de l'équilibre entre les forces de friction engendrées par l'écoulement ascendant du liquide et du gaz, et les forces gravitaires dirigées vers le bas, le lit de particules de catalyseur atteint un niveau haut d'expansion pendant que le liquide et le gaz plus légers continue de se diriger vers le haut du réacteur (10) au-delà de ce niveau solide. Dans le schéma, le niveau d'expansion maximale du catalyseur correspond à l'interface (23). Au-dessous de cet interface (23) se trouve la zone de réaction catalytique (22) qui s'étend donc de la grille (18) au niveau (23).

Au-dessus de l'interface (23) se trouve une zone (39) ne contenant que du gaz et du liquide. Les particules de catalyseur dans la zone de réaction (22) sont en mouvement aléatoire à l'état fluidisé, raison pour laquelle la zone réactionnelle (22) est qualifiée de zone fluidisée triphasique.

La zone (29), à faible concentration de catalyseur au-dessus du niveau (23), est remplie de liquide et de gaz entrainé. Le gaz est séparé du liquide dans la partie supérieure du réacteur appelée « recycle cup » (30) afin de collecter et recycler la majeure partie du liquide à travers le conduit central (25). Il est important que le liquide recyclé à travers la conduite central (25) contienne le moins de gaz possible, voire pas de gaz du tout, pour éviter le phénomène de cavitation de la pompe (20).

Les produits liquides restant après la séparation gaz liquide peuvent être soutirés à travers le conduit (24). Le conduit (40) est utilisé pour le soutirage du gaz.

La partie élargie à l'extrémité supérieure du conduit (25) forme la zone de recyclage du liquide 39V et 39 L.

Une pluralité d'éléments de séparation (27) et (28) orientés verticalement créent le lien entre la zone gaz liquide (29) et la zone de recyclage (39).

Le mélange gaz liquide s'écoule vers le haut à travers les conduits des éléments de séparation (27) et (28). Une partie du liquide séparé est ensuite dirigée vers la pompe de recyclage (20) dans la direction de la flèche (31) à travers le conduit central (25), et est donc recyclée vers la partie inférieure du réacteur (10) en-dessous de la grille (18).

Le gaz séparé du liquide, s'écoule vers la partie supérieure du réacteur (10) et est soutiré par le conduit supérieur (40). Le gaz soutiré est ensuite traité d'une manière conventionnelle pour récupérer autant d'hydrogène que possible afin que ce dernier soit recyclé vers le réacteur à travers le conduit (13).

L'organisation générale de la circulation des fluides n'est pas modifié dans la présente invention par rapport à l'art antérieur tel qu'il vient d'être décrit. Seuls sont modifiés la géométrie des éléments de séparation (27) et (28) et le dimensionnement de la zone de recyclage (39).

La figure 2 est un schéma plus précis de la zone de recyclage (39) présenté dans la figure 1.

Le gaz et le liquide ont un écoulement ascendant montré par la flèche de direction (41) et sont introduits à travers les conduits d'admission (70) où ils subissent un changement de direction à environ 90° à la fois dans le premier coude et le second coude terminant les éléments de séparation (27) et (28).

Le niveau (24) sépare la partie supérieure (39 V) contenant majoritairement le gaz séparé, de la partie inférieure (39L) contenant majoritairement le liquide recyclé. Les différents liquide séparés (45) issus du second coude des éléments (27) et (28) s'écoulent vers le bas par l'intermédiaire de la paroi conique (30), et sont collectés par le conduit de recyclage central (25) pour être repris par la pompe de recyclage (20).

La majeure partie du liquide (31) est donc recyclé vers la pompe d'ébullition (20) à travers le conduit central (25). Le gaz et une mineure partie de liquide non séparé (67) sont soutirés à travers le conduit (40). Le conduit (40) possède en général des fentes (65) en son extrémité inférieure qui permettent de fixer la hauteur de l'interface liquide-gaz (24).

La figure 3 présente la géométrie d'un dispositif de séparation gaz liquide selon l'invention plus en détail, et fait apparaitre les dimensions géométriques importantes pour le dimensionnement dudit dispositif.

Le diamètre du conduit d'admission (70) de chaque élément de séparation (27) et (28) est généralement compris entre 0,02 m et 0,5 m, de préférence entre 0,05 m et 0,4m, et de manière préférée entre 0,1m et 0,3 m.

La vitesse superficielle de liquide de l'écoulement ascendant représenté par la flèche de direction (41) est généralement comprise entre 0,1 et 20 m/s, de préférence entre 0,2 m/s et 15 m/s, et de manière préférée entre 0,3 m/s et 10 m/s.

Le premier coude situé dans le plan (yz) a son orientation défini par son angle $\alpha$. La valeur de l'angle $\alpha$ est compris entre 45 et 315°, de préférence entre 60° et 300°et de manière préférée entre 80° et 200°.

Le deuxième coude situé dans le plan (xy) a son orientation défini par son angle $\beta$. La valeur de l'angle $\beta$ est compris entre 0° et 135° de préférence entre 10° et 110°et de manière préférée entre 30° et 100°.

La hauteur H1 comprise entre l'interface gaz et liquide (24) et le second coude dans le plan (xy) se situe entre D et 10D, et préférentiellement entre 2D et 5D, D étant le diamètre de la conduite (70).

La distance D séparant les deux coudes successifs est comprise entre D/2 et 4D et préférentiellement comprise entre D/2 et 2D, D étant le diamètre de la conduite (70).

## EXEMPLE SELON L'INVENTION

Cet exemple donne le dimensionnement d'un dispositif de séparation gaz liquide selon l'invention. Les conditions opératoires du procédé ainsi que les principales données géométriques du dispositif sont présentés dans le tableau 1 ci-dessous.

**Table 1 : Conditions opératoires de la zone de recyclage et paramètres géométriques du séparateur**

| Débits des phases gaz et liquide entrant dans la zone de recyclage | | |
|---|---|---|
| Liquide | | |
| Débit | kg/s | 257,5 |
| Masse volumique | kg/m3 | 730,3 |
| Gaz | | |
| Débit | kg/s | 12,9 |
| Masse volumique | kg/m3 | 32,6 |

(suite)

| Gaz | |
|---|---|
| | |
| Nombre de dispositifs de séparation selon l'invention | 35 |
| Diamètre de chaque conduit (75) | 15 cm |
| Angle alpha du premier coude | 90° |
| Angle beta du deuxième coude | 90° |

L'efficacité gaz est définie par l'équations 1 ci-dessous. Les numéros des flux se réfèrent à la figure 3.

$$\text{Efficacité\_gaz}(\%\text{m}) = \frac{\text{Débit\_gas (67)}}{\text{Débit\_gas (41)}} \qquad \textbf{Eq. 1}$$

Le tableau 2 présente les efficacité gaz obtenue :

**Table 2 : Efficacité de séparation**

| Efficacité gaz | 100% |
|---|---|

Une simulation CFD en 3D de l'invention a été effectuée au moyen du logiciel Fluent™.

Une approche Eulérienne est utilisée pour chaque phase (liquide et gaz) avec une résolution d'équations de conservation de masse et de quantité de mouvement.

La figure 4 montre la fraction volumique liquide dans le dispositif de séparation selon l'invention ainsi que dans la zone de recyclage en entier, en variation de gris. Plus la nuance de gris est soutenue, plus la concentration en phase liquide est élevée. On constate que le dispositif selon l'invention réalise une séparation quasi parfaite du gaz et du liquide qui se retrouve le long de la paroi (50) en écoulement descendant. La fraction gaz se retrouve dans la tubulure de sortie (53).

**Revendications**

1.  Dispositif de séparation gaz liquide implanté dans la zone de recycle des réacteurs fluidisés triphasiques utilisés dans les procédés d'hydroconversion de coupes hydrocarbonées lourdes en présence d'hydrogène sous forte pression, la zone de recycle (39) étant constituée de l'hémisphère supérieur du réacteur et limitée à la partie inférieure par une surface conique (30) permettant le retour dans la zone catalytique du liquide séparé, dispositif consistant en une pluralité d'éléments de séparation (27) et (28) fonctionnant en parallèle et implantés verticalement à partir de la surface conique (30) de la zone de recycle (39), chaque élément de séparation (27) et (28) possédant un conduit d'admission (70) du mélange gaz liquide ouvert sur la surface conique (30) et s'élevant jusqu'à une hauteur H à l'intérieur de la zone de séparation (39), et se terminant par une succession de deux coudes; un premier coude situé dans le plan (zy) défini par l'axe z sensiblement vertical, et un axe y appartenant au plan (xy) perpendiculaire à l'axe z, ayant son orientation défini par son angle $\alpha$ compris entre 45 et 315° de préférence entre 60° et 300°, et de manière préférée entre 80° et 200°, et un second coude situé dans le plan (x,y), l'axe x étant lui-même perpendiculaire à l'axe y, ayant son orientation défini par son angle $\beta$ compris entre 0° et 135°, de préférence entre 10° et 110°, et de manière préférée entre 30° et 100°, les deux coudes successifs étant séparés d'une distance D1 comprise entre D/2 et 4D, et préférentiellement comprise entre D/2 et 2D, D étant le diamètre de la conduite (70).

2.  Dispositif de séparation gaz liquide selon la revendication 1, dans lequel distance H1 séparant l'extrémité de sortie du second coude situé dans le plan (xy) de l'interface (24) est comprise entre D et 10D, et préférentiellement entre 2D et 5D, D étant le diamètre de la conduite d'admission (70).

3.  Dispositif de séparation gaz liquide selon la revendication 1, dans lequel la densité des éléments de séparation (27) et (28) est comprise entre 5 et 70 unités par m2 de surface de réacteur en fût vide.

**4.** Procédé d'hydroconversion de coupes hydrocarbonées lourdes en lit fluidisé triphasique utilisant le dispositif de séparation gaz liquide selon l'une quelconque des revendications 1 à 3, dans lequel les conditions opératoires sont les suivantes :

- une pression absolue comprise entre 2 et 35 MPa, de préférence entre 5 et 25 MPa, et de manière encore préférée, entre 6 et 20 MPa, et à
- une température comprise entre 300°C et 550°C, de préférence comprise entre 350 et 500°C, et d'une manière encore préférée comprise entre 370°C et 430°C, la plage de température privilégiée se situant entre 380°C et 430°C.

**5.** Procédé d'hydroconversion de coupes hydrocarbonées lourdes en lit fluidisé triphasique utilisant le dispositif de séparation gaz liquide selon l'une quelconque des revendications 1 à 3, dans lequel la vitesse superficielle de l'écoulement ascendant prise à l'intérieur de chaque conduit d'admission (70) est comprise entre à 0,1 et 20 m/s, préférentiellement entre 0,2 et 15 m/s, et de manière encore préférée comprise entre 0,3 et 10 m/s.

**Patentansprüche**

**1.** Vorrichtung zur Gas-Flüssig-Trennung, die in der Rückführzone von dreiphasigen Wirbelschichtreaktoren eingebaut ist, die in Verfahren zur hydrierenden Umwandlung von schweren Kohlenwasserstofffraktionen unter hohem Druck eingesetzt werden, wobei die Rückführzone (39) vom oberen Bereich des Reaktors gebildet ist und am unteren Abschnitt durch eine kegelförmige Fläche (30) begrenzt ist, die ein Rückströmen der abgetrennten Flüssigkeit in die katalytische Zone ermöglicht, wobei die Vorrichtung aus einer Vielzahl von Trennelementen (27) und (28) gebildet ist, die parallel arbeiten und von der kegelförmigen Fläche (30) der Rückführzone (39) aus senkrecht eingebaut sind, wobei jedes Trennelement (27) und (28) eine Zuführungsleitung (70) für die Gas-Flüssigkeits-Mischung besitzt, die an der kegelförmigen Fläche (30) offen ist und sich im Inneren der Trennzone (39) bis auf eine Höhe H erstreckt und mit einer Abfolge von zwei Bögen endet; wobei ein erster Bogen in der Ebene (zy) liegt, die durch die im Wesentlichen vertikale Achse z und eine der Ebene (xy) zugehörige Achse y senkrecht zur Achse z definiert ist, dessen Ausrichtung durch den Winkel $\alpha$ definiert ist, der zwischen 45 und 315°, vorzugsweise zwischen 60° und 300° und bevorzugt zwischen 80° und 200° liegt, und wobei ein zweiter Bogen in der Ebene (x,y) liegt, wobei die Achse x selbst senkrecht zur Achse y verläuft, dessen Ausrichtung durch den Winkel $\beta$ definiert ist, der zwischen 0° und 135°, vorzugsweise zwischen 10° und 110°, bevorzugt zwischen 30° und 100° liegt, wobei die beiden aufeinanderfolgenden Bögen durch einen Abstand D1 getrennt sind, der zwischen D/2 und 4D und vorzugsweise zwischen D/2 und 2D liegt, wobei D der Durchmesser der Leitung (70) ist.

**2.** Vorrichtung zur Gas-Flüssig-Trennung nach Anspruch 1, wobei der Abstand H1 zwischen dem Ausströmende des zweiten Bogens, der in der Ebene (xy) liegt, und der Grenzfläche (24) zwischen D und 10D und vorzugsweise zwischen 2D und 5D liegt, wobei D der Durchmesser der Zuführungsleitung (70) ist.

**3.** Vorrichtung zur Gas-Flüssig-Trennung nach Anspruch 1, wobei die Dichte der Trennelemente (27) und (28) zwischen 5 und 70 Einheiten je m$^2$ Reaktorfläche in der leeren Kammer beträgt.

**4.** Verfahren zur hydrierenden Umwandlung von schweren Kohlenwasserstofffraktionen in dreiphasiger Wirbelschicht unter Verwendung der Vorrichtung zur Gas-Flüssig-Trennung nach einem der Ansprüche 1 bis 3, wobei die Betriebsbedingungen folgendermaßen lauten:

- Absolutdruck zwischen 2 und 35 MPa, vorzugsweise zwischen 5 und 25 MPa und noch bevorzugter zwischen 6 und 20 MPa, und
- Temperatur zwischen 300°C und 550°C, vorzugsweise zwischen 350 und 500°C und noch bevorzugter zwischen 370°C und 430°C, wobei der vorteilhafte Temperaturbereich zwischen 380°C und 430°C liegt.

**5.** Verfahren zur hydrierenden Umwandlung von schweren Kohlenwasserstofffraktionen in dreiphasiger Wirbelschicht unter Verwendung der Vorrichtung zur Gas-Flüssig-Trennung nach einem der Ansprüche 1 bis 3, wobei die Oberflächengeschwindigkeit der aufsteigenden Strömung im Inneren jeder Zuführungsleitung (70) zwischen 0,1 und 20 m/s, vorzugsweise zwischen 0,2 und 15 m/s und noch bevorzugter zwischen 0,3 und 10 m/s beträgt.

**Claims**

1. Gas-liquid separation device installed in the recycle zone of the three-phase fluidized reactors used in processes for the hydroconversion of heavy hydrocarbon fractions in the presence of hydrogen under high pressure, the recycle zone (39) being made up of the upper hemisphere of the reactor and delimited in its lower part by a conical surface (30) allowing the separated liquid to return to the catalytic zone, the device consisting in a plurality of separation elements (27) and (28) operating in parallel and installed vertically from the conical surface (30) of the recycle zone (39), each separation element (27) and (28) having an inlet pipe (70) for admitting the gas-liquid mixture, open onto the conical surface (30) and rising to a height H inside the separation zone (39), and ending in a succession of two bends: a first bend situated in the (zy) plane defined by the substantially vertical z-axis, and a γ-axis belonging to the (xy) plane perpendicular to the z-axis, having its orientation defined by its angle α comprised between 45 and 315°, preferably between 60° and 300°, and, for preference, between 80° and 200°, and a second bend situated in the (x,y) plane, the x-axis being itself perpendicular to the γ-axis, having its orientation defined by its angle β comprised between 0° and 135°, preferably between 10° and 110°, and, for preference, between 30° and 100°, the two successive bends being separated by a distance D1 comprised between D/2 and 4D and preferably comprised between D/2 and 2D, D being the diameter of the pipe (70).

2. Gas-liquid separation device according to Claim 1, in which the distance H1 separating the outlet end of the second bend situated in the (xy) plane from the interface (24) is comprised between D and 10D, and preferably between 2D and 5D, D being the diameter of the inlet pipe (70).

3. Gas-liquid separation device according to Claim 1, in which the density of the separation elements (27) and (28) is comprised between 5 and 70 units per m2 of empty barrel reactor surface area.

4. Process for the three-phase fluidized bed hydroconversion of heavy hydrocarbon fractions using the gas-liquid separation device according to any one of Claims 1 to 3, in which the operating conditions are as follows:

   - an absolute pressure comprised between 2 and 35 MPa, preferably between 5 and 25 MPa, and more preferably still, between 6 and 20 MPa, and
   - a temperature comprised between 300°C and 550°C, preferably comprised between 350 and 500°C, and more preferably still, comprised between 370°C and 430°C, the favored temperature range lying between 380°C and 430°C.

5. Process for the three-phase fluidized bed hydroconversion of heavy hydrocarbon fractions using the gas-liquid separation device according to any one of Claims 1 to 3, in which the surface velocity of the upflow considered inside each inlet pipe (70) is comprised between 0.1 and 20 m/s, preferably between 0.2 and 15 m/s, and more preferably still, comprised between 0.3 and 10 m/s.

Figure 1

Figure 2

EP 3 538 627 B1

Figure 3

11

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4886644 A

- US 5624642 A